# EUROPEAN PATENT APPLICATION

(11) **EP 4 838 599 A1**
(43) Date of publication of application: **11.11.2026**
(21) Application number: 25830999.6
(22) Date of filing: 09.04.2025
(51) Int. Cl.: H01M 10/04

(54) **DEVICE FOR REFORMING SEPARATOR OF ELECTRODE ASSEMBLY, ELECTRODE ASSEMBLY INSERTION DEVICE INCLUDING SAME, AND METHOD FOR REFORMING SEPARATOR OF ELECTRODE ASSEMBLY**

(30) Priority: 20.06.2024 KR 20240080634
(71) Applicant: LG Energy Solution, Ltd., Seoul 07335 (KR)
(72) Inventor: OH, Kyungteak, Daejeon 34122 (KR); PARK, Hyeonjun, Daejeon 34122 (KR); JEONG, Seokhun, Daejeon 34122 (KR); KIM, Chungon, Daejeon 34122 (KR)
(74) Representative: Goddar, Heinz J.
(86) International application number: PCT/KR2025/004803
(87) International publication number: WO 2025/263774

(57) **Abstract**

A separator reforming device usable in the process of inserting an electrode assembly into a can is provided. The separator reforming device includes: a body portion supporting a bottom surface of an electrode assembly; a head portion provided with a plurality of split heads installed above the body portion so as to be reciprocally movable in radial direction relative to a center thereof; and a reform pin connected to each of the plurality of split heads at the center of the head portion and extending upward in axial direction from each of the plurality of split heads so as to be inserted into a core hollow portion of the electrode assembly; an actuator moving the plurality of split heads radially outward; a return member returning the plurality of split heads to a radially inner side; and a heater heating the reform pin.

## Description

### [TECHNICAL FIELD]

This application claims the benefit of priority based on Korean Patent Application No. 10-2024-0080634 filed on June 20, 2024, entire content disclosed in the document of the patent applications is included as a part of this specification.

The present invention relates to a device for reforming a separator of a cylindrical electrode assembly, and more specifically, to a separator reforming device that may be used in the process of inserting an electrode assembly into a can.

### [BACKGROUND ART]

With the spread of electric vehicles, the capacity of cylindrical battery cells manufactured using a cylindrical battery can as a housing is increasing. Accordingly, compared to conventional cylindrical battery cells, the diameter and height of the electrode assembly have become larger, and the internal space of the can that accommodates the electrode assembly has also become wider.

Contrarily, the diameter of the core hollow portion of the electrode assembly has not changed compared to the conventional one. Conventionally, the volume of air present in the internal space of the can was small such that the air present in the internal space of the can was not discharged at a high flow velocity through the core hollow portion of the electrode assembly during the process of inserting the electrode assembly into the internal space of the can.

However, since the volume of air present in the internal space of the can is large in the battery cell with increased capacity compared to the conventional one, the flow velocity of air present in the can is very high when discharged through the core hollow portion of the electrode assembly during the process of inserting the electrode assembly into the internal space of the can. Accordingly, the core of the separator in the core hollow portion may loosen.

When the core of the separator loosens, the tool deforms or damages the core of the loose separator during the insertion of the tool through the core hollow portion in a subsequent process. This causes a decrease in the capacity and life of the battery cell.

### [DISCLOSURE]

### [TECHNICAL PROBLEM]

In order to solve the above-described problem, it is an object of the present invention to provide a separator reforming device capable of reforming the core of the separator to be brought into contact with the inner circumferential surface that defines the core hollow portion of the electrode assembly.

It is an object of the present invention to provide an electrode assembly insertion device capable of preventing a separator core from loosening when inserting an electrode assembly of a cylindrical battery cell into a can.

It is an object of the present invention to provide a separator reforming method of an electrode assembly capable of reforming a separator core in a process of inserting an electrode assembly into a can.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention provides a separator reforming device including: a body portion supporting a bottom surface of an electrode assembly; a head portion provided with a plurality of split heads installed above the body portion so as to be reciprocally movable in radial direction relative to a center thereof; and a reform pin connected to each of the plurality of split heads at the center of the head portion and extending upward in axial direction from each of the plurality of split heads so as to be inserted into a core hollow portion of the electrode assembly.

The split head may have a form that is divided into a plurality of portions in a circumferential direction with respect to the center thereof. Preferably, three split heads may be provided to correspond to a 120-degree section.

The outer circumference of the reform pin may have a convex arc shape.

An insertion guide surface in a form of slanted surface having an outer diameter gradually decreasing toward upward direction may be provided above the reform pin.

The body portion may be provided with a first guide extending in the radial direction to guide radial movement of each of the plurality of split heads. Preferably, the first guide may be a rail groove extending in the radial direction. Three first guides may be provided at 120 degree intervals in the circumferential direction.

Each of the plurality of split heads may be provided with a second guide sliding in the radial direction while being in contact with the first guide. Preferably, the second guide may be a rail protrusion extending in the radial direction.

The plurality of split heads may move to default positions gathered at the center, and to extended positions radially outward from the center.

The separator reforming device may further include an actuator moving the plurality of split heads radially outward. The actuator may be installed at the body portion so as to be movable upward and downward in the axial direction.

A contacting portion in contact with the actuator may be provided on a radially inner side of each of the plurality of split heads.

A slanted inner circumferential surface having an inner diameter gradually decreasing toward the upward direction may be provided at the contacting portion.

A slanted outer circumferential surface having an outer diameter gradually decreasing toward upward direction is provided above the actuator, and the slope of the slanted outer circumferential surface may correspond to that of the slanted inner circumferential surface.

The separator reforming device may further include a return member returning the plurality of split heads to a radially inner side. The return member may include an elastic body elastically supporting the plurality of split heads radially inward. The elastic body may be a coil spring embedded in the rail groove and extending in the lengthwise direction of the rail groove, i.e., in the radial direction of the body portion.

The separator reforming device may further include a heater heating the reform pin.

The heater may be disposed on the upper surface of the body portion in contact with the head portion.

The heater may heat the reform pin by a resistance heating method.

The reform pin may be heated to 120 to 140 degrees Celsius by the heater.

The present invention provides an electrode assembly insertion device provided with a separator reforming device.

The electrode assembly insertion device includes: a can holder supporting a can with an opening of an internal space thereof facing downward; and a lifter inserting an electrode assembly axially upward direction through the opening from a lower portion of the can holder.

The separator reforming device is installed at the lifter.

The present invention provides a method of reforming a separator portion provided in a core hollow portion of an electrode assembly using the electrode assembly insertion device.

The method includes: inserting the electrode assembly using a lifter into a first position of an internal space of a can through an opening of the can with a reform pin of a split head disposed at the default position inserted into a core hollow portion of the electrode assembly.

The method includes: operating an actuator to move the split head radially outward from the first position to bring the separator portion into contact with an inner circumference of the core hollow portion using the reform pin.

The method may further include: heating the reform pin to hot-reform the separator portion in contact with the inner circumference of the core hollow portion.

The method may further include: inserting the electrode assembly using the lifter to a second position deeper than the first position.

### [ADVANTAGEOUS EFFECTS]

When the separator reforming device of the present invention is applied to an electrode assembly insertion device, a phenomenon in which a separator core is loosened in a process of inserting an electrode assembly into a can may be prevented.

When the separator reforming device of the present invention is applied to an electrode assembly insertion device, a reforming process in which the core of the separator is brought into contact with an inner circumferential surface defining a core hollow portion of the electrode assembly may be performed simultaneously in a process of inserting an electrode assembly into a can. Therefore, a separate separator reforming process may be omitted.

According to the separator reforming method of the present invention, core reform of the separator may be performed simultaneously while inserting the electrode assembly into the can.

In addition to the advantageous effects described above, specific effects of the present invention will be described further while describing specific details of the present invention.

### [BRIEF DESCRIPTION OF DRAWINGS]

FIG. 1 is an exploded perspective view of an electrode assembly before winding accommodated inside a can of a battery cell.
FIG. 2 is a perspective view of the electrode assembly of FIG. 1 before winding in a laminated state.
FIG. 3 is a perspective view of an electrode assembly assembled in a cylindrical jelly-roll form by winding the laminate of FIG. 2.
FIG. 4 is a perspective view illustrating the electrode assembly with a first current collector plate bonded to electrode tabs provided at a first axial end thereof facing an end wall of a can.
FIG. 5 is a perspective view illustrating the electrode assembly with a second current collector plate bonded to electrode tabs provided at a second axial end thereof facing a second end wall or opening of a can.
FIG. 6 is a perspective view of the can from below that accommodates the electrode assembly of FIG. 5.
FIG. 7 is a perspective view of an electrode assembly insertion device according to the present invention.
FIG. 8 is an exploded upper perspective view of a separator reforming device applied to the electrode assembly insertion device of FIG. 7.
FIG. 9 is an exploded perspective view of the separator reforming device of FIG. 8 from below.
FIG. 10 is a cross-sectional view illustrating a can with an insulator inserted therein gripped by a can holder.
FIG. 11 is a cross-sectional view illustrating a reforming device lifted by a lifter with an electrode assembly mounted thereon.
FIG. 12 is a cross-sectional view taken along the line XII-XII of FIG. 11.
FIG. 13 is a cross-sectional view illustrating the electrode assembly inserted to a first position of an internal space of the can.
FIG. 14 is a cross-sectional view illustrating the electrode assembly with a reform pin bringing a core of a separator into contact with an inner circumferential surface of the electrode assembly by lifting an actuator of the reforming device to move split heads radially outward.
FIG. 15 is a cross-sectional view taken along the line XV-XV of FIG. 14.
FIG. 16 illustrates the electrode assembly inserted to the final position of the internal space of the can while the reform pin is reforming the core of the separator.
FIG. 17 is a cross-sectional view illustrating the electrode assembly with the reform pin spaced apart radially inward from the inner circumferential surface thereof by lowering the actuator of the reforming device and moving the split heads radially inward by a return member.
FIG. 18 is a cross-sectional view taken along the line XVIII-XVIII of FIG. 17.
FIG. 19 is a cross-sectional view illustrating a process of removing the separator reform pin from the core hollow portion of the electrode assembly with the electrode assembly inserted to the final position and the reform pin retracted.
FIG. 20 is a cross-sectional view illustrating a process of welding a first current collector plate and a first electrode terminal by inserting a welding rod through the core hollow portion of the electrode assembly after the insertion process of the electrode assembly is completed.

### [DESCRIPTION OF REFERENCE NUMERALS]

10: can
11: side wall
12: end wall
15: cap gasket
17: first electrode terminal
170: terminal gasket
19: insulator
20: electrode assembly
21: first electrode
22: second electrode
23: metal foil (current collector)
24: active material layer (active material)
25: coated portion
26: non-coated portion
27: electrode tab (notched tab)
28: separator
280: core
29: core hollow portion
30: first current collector plate
31: perimeter
310: first electrode joint
32: center portion
320: terminal joint
33: bridge
40: second current collector plate
41: center portion
410: second electrode joint
42: edge portion
43: connecting portion
50: can holder
60: lifter
70: reforming device
71: body portion
711: first guide (rail groove)
72: head portion
722: split head
723: contacting portion (slanted inner circumferential surface)
724: reform pin
725: insertion guide surface
727: second guide (rail protrusion)
74: actuator
746: slanted outer circumferential surface
75: heater
76: return member (elastic body, coil spring)
90: electrode assembly insertion device

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

In the description of the embodiments, "axial direction" refers to "a direction in which the axis constituting the winding center of the jelly-roll type electrode assembly extends," and "radial direction" refers to "a direction toward or away from the axis," and "circumferential direction" refers to "a direction surrounding the axis."

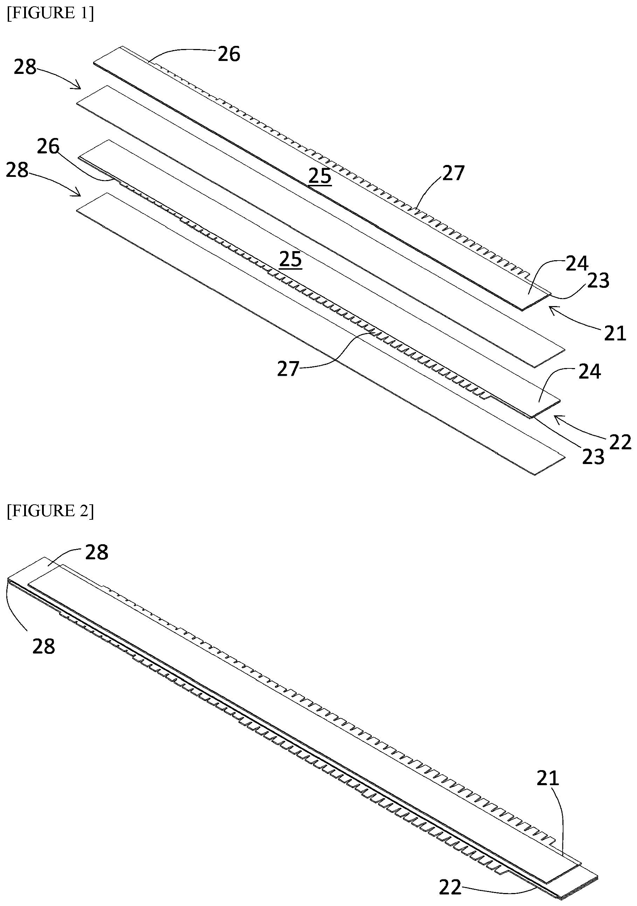

Hereinafter, with reference to FIGS. 1 to 6, the structures of an electrode assembly and a can to which a separator reforming device and an electrode assembly insertion device according to an embodiment of the present invention may be applied will be described. However, the structures of the electrode assembly and the can described below are merely embodiments, and it is apparent that the separator reforming device and the electrode assembly insertion device according to the embodiment may also be applied to electrode assemblies and cans of different structures.

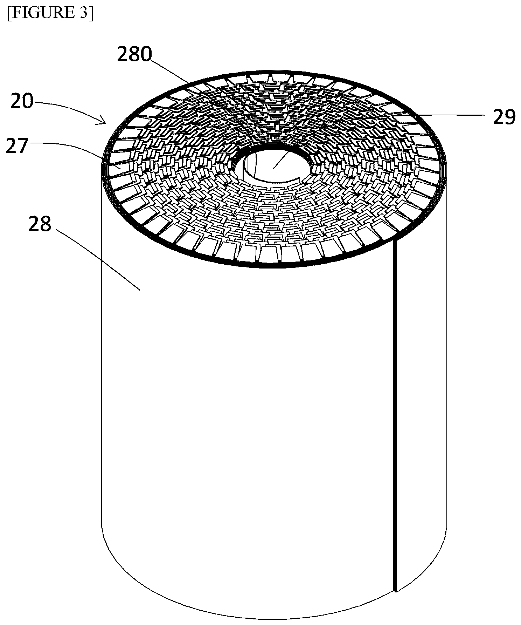

Referring to FIGS. 1 to 3, the electrode assembly 20 is manufactured by preparing a first electrode 21, a second electrode 22 and a separator 28 that have a predetermined width and extend in a lengthwise direction (see FIG. 1), forming a laminate by sequentially stacking the first electrode 21, the separator 28, the second electrode 22, and the separator 28 as shown in FIG. 2, and winding the laminate into a jelly-roll form around a core shaft (see FIG. 3).

The first electrode 21 may be a anode, and the second electrode 22 may be a cathode, or vice versa.

The first electrode 21 and the second electrode 22 are manufactured in a sheet form that have a predetermined width and extend in the lengthwise direction. The electrode sheet is manufactured by applying an active material 24 to the surface of a current collector 23 such as a metal foil. The electrode sheet has a coated portion 25 where the active material 24 is applied, and a non-coated portion 26 without the active material 24. The current collector 23 of the first electrode 21 has a non-coated portion 26 at first widthwise end thereof, and the current collector 23 of the second electrode 22 has a non-coated portion 26 at a second widthwise end thereof.

The non-coated portions 26 of the current collectors 23 of the first electrode 21 and the second electrode 22 are exposed or protrude in the widthwise direction from the laminate to the first widthwise end and the second widthwise end as shown in FIG. 2. The non-coated portion 26 functions as an electrode tab 27 itself.

The non-coated portion 26 may be provided with notches at a predetermined interval to form electrode tabs 27 in the shape of a flag.

In the embodiment, the electrode tabs 27 having a shape of an isosceles trapezoid are exemplified. However, the electrode tabs 27 may have various shapes such as a semicircle, a semi-ellipse, a triangle, a rectangle, a parallelogram, etc.

In addition, in the embodiment, the electrode tabs 27 having the same width and arranged along the lengthwise direction are exemplified. However, the width of the electrode tabs may be gradually or stepwisely increased from the core toward the outer circumference.

In addition, in the embodiment, the electrode tabs 27 with gradually increasing height from the core toward the outer circumference are exemplified. However, the height of the electrode tabs may be a constant or may gradually decrease.

In addition, in the embodiment, exemplified is a structure with electrode tabs 27 removed from predetermined sections of the centripetal end and the centrifugal end of the non-coated portion 26. However, it is also apparent that the electrode tabs are not removed from the centripetal end of the non-coated portion, and the electrode tabs are not removed from the centrifugal end of the non-coated portion.

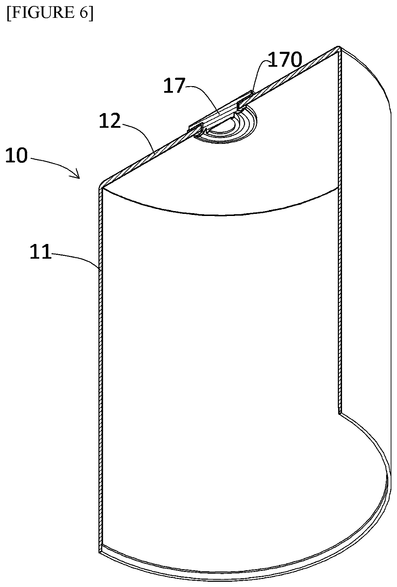

In the jelly-roll type electrode assembly 20, the electrode tab 27 may be bent in the radial direction and flattened as shown in FIG. 6. The electrode tab 27 may be bent radially inward or radially outward. Preferably, the electrode tabs 27 may be bent radially inward.

The electrode tabs 27 may be bent one by one during the process of forming the jelly-roll type electrode assembly 20 by winding the laminate. Alternatively, the electrode tabs 27 may be bent all at once after the jelly-roll type electrode assembly is formed by winding the laminate.

The electrode tabs 27 of the first electrode 21 and the electrode tabs 27 of the second electrode 22 that are folded and overlapped in the radial direction may provide a first plane and a second plane substantially perpendicular to the axial direction at two axial ends of the electrode assembly 20, respectively.

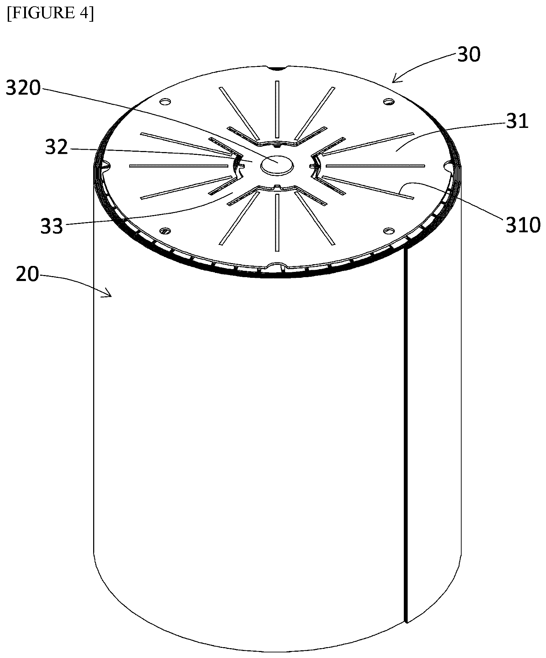

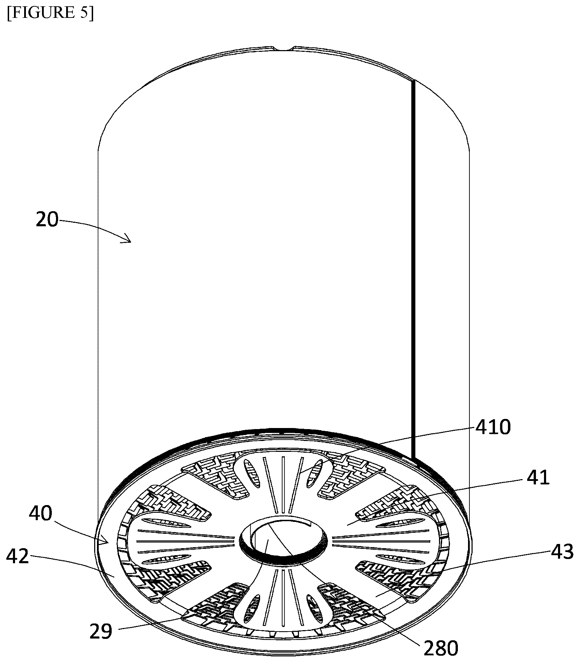

As shown in FIG. 4 and FIG. 5, the first current collecting plate 30 and the second current collecting plate 40 may be bonded to the substantially flat first surface and second surface provided by the electrode tabs 27 exposed at the two axial ends of the electrode assembly 20, respectively.

In the embodiment, the first current collecting plate 30 is an anode collecting plate, and the second current collecting plate 40 is a cathode collecting plate. However, the first current collecting plate 30 may be a cathode collecting plate, and the second current collecting plate 40 may be an anode collecting plate.

The second current collecting plate 40 may include copper material, and the first current collecting plate 30 may include aluminum material. However, the material is not limited thereto.

The current collector plates 30 and 40 may be manufactured by punching, trimming, piercing, drawing or bending a meal plate or a metal sheet.

Referring to FIG. 4, the first current collector plate 30 includes a center portion 32 provided at a portion corresponding to the core hollow portion 29 of the electrode assembly 20, and a perimeter portion 31 provided around the center portion 32. The center portion 32 is disposed at the center of the first current collector plate 30 and has a form that covers at least a portion of the core hollow portion 29 of the electrode assembly 20 in the axial direction. The perimeter portion 31 is spaced apart from the center portion 32 in the radial direction and surrounds the center portion 32.

The center portion 32 and the perimeter portion 31 are physically and electrically connected to each other through the bridge 33. The bridge 33 is arranged between the center portion 32 and the perimeter portion 31 in the radial direction. The bridge 33 has a predetermined circumferential width and extends by a predetermined radial length. The first lengthwise end of the bridge 33 provided at radially outer side is connected to the perimeter portion 31, and the second lengthwise end of the bridge 33 provided at radially inner side is connected to the center portion 32. A plurality of bridges 33 is provided, and spaced apart along the circumferential direction. Preferably, the plurality of bridges 33 may extend radially from a terminal joint 320 provided in the center portion 32 and be spaced apart from one another at equal intervals in the circumferential direction. The perimeter portion 31 and the center portion 32 are electrically connected to each other by the bridge 33.

The first plane provided by the electrode tabs 27 of the first electrode 21 that are bent radially inward faces the perimeter portion 31 in the axial direction.

The first current collector plate 30 is electrically connected to the first electrode 21 of the electrode assembly 20 by being bonded to the electrode tabs 27 of the first electrode 21 at the first electrode joint 310 provided at least in a portion of the perimeter portion 31. The first electrode joint 310 may be a portion that is welded to the electrode tabs 27 through the first current collector plate 30 by a laser irradiated onto the surface thereof. Each first electrode joint 310 extends in the radial direction, and a plurality of first electrode joints 310 are arranged to be spaced apart from one another along the circumferential direction of the perimeter portion 31.

A terminal joint 320 facing the first electrode terminal 17 in the axial direction and bonded to the first electrode terminal 17 is provided in the center portion 32 of the first current collector plate 30.

Referring to FIG. 5, the second current collector plate 40 includes a ring-shaped center portion 41 having a hole at the center thereof, and an edge portion 42 surrounding the center portion 41 from radially outer side of the center portion 41. The center portion 41 is spaced apart from the edge portion 42 in the radial direction. The center portion 41 and the edge portion 42 are physically and electrically connected to each other through a plurality of connecting portions 43 extending radially with respect to the center axis.

In the center portion 41, a plurality of second electrode joints 410 welded therethrough to the electrode tabs 27 of the second electrode 22 of the electrode assembly 20 at radially extending laser welding lines. The plurality of second electrode joints 410 are spaced apart from one another along the circumferential direction, avoiding the connecting portion 43.

The edge portion 42 is electrically connected to the can 10 by being bonded to the side wall 11 of the can 10.

Referring to FIG. 6, the can 10 has an internal space for accommodating the electrode assembly 20.

The can 10 includes: a side wall 11 extending in the axial direction and surrounding the internal space in the circumferential direction; an end wall 12 connected to the first axial end of the side wall and extending radially to cover the internal space; and an opening provided at the second axial end of the side wall opposite the first axial end.

A first electrode terminal 17 electrically connected to the first electrode 21 of the electrode assembly 20 is installed through the end wall 12 so as to be electrically insulated from the end wall 12. The first electrode terminal 17 is installed at the center portion of the end wall 12.

A terminal gasket 170 having electrical insulating properties and high sealing properties is press-fitted between the end wall 12 and the first electrode terminal 17.

The end wall 12 may be connected to the side wall 11 before inserting the electrode assembly 20 into the internal space of the can 10.

The end wall 12 may be manufactured as a separate part from the side wall 11 and then bonded to the first axial end of the side wall 11, or may be formed integrally with the side wall 11 from the beginning and connected in a monolithic manner.

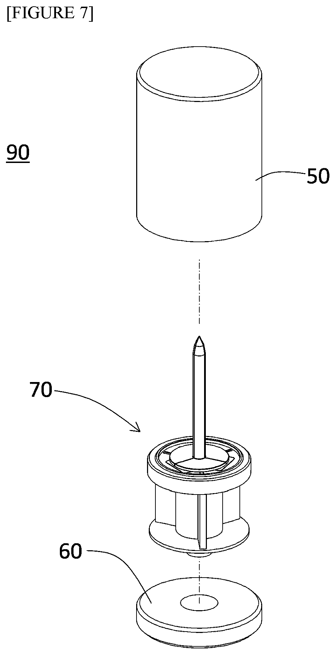

Referring to FIG. 7, an electrode assembly insertion device 90 according to the embodiment of the present invention includes: a can holder 50 that supports the can 10 in a manner that the opening of the internal space of the can 10 faces downward; and a lifter 60 that inserts the electrode assembly into the internal space of the can 10 in an axially upward direction through the opening from the lower portion of the can holder 50. The electrode assembly may be installed on the lifter 60 through a separator reforming device 70.

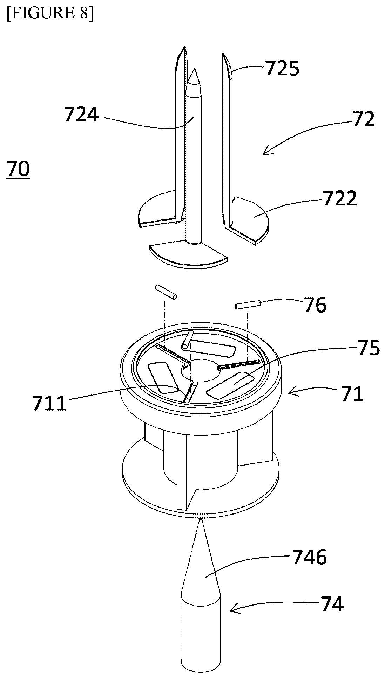

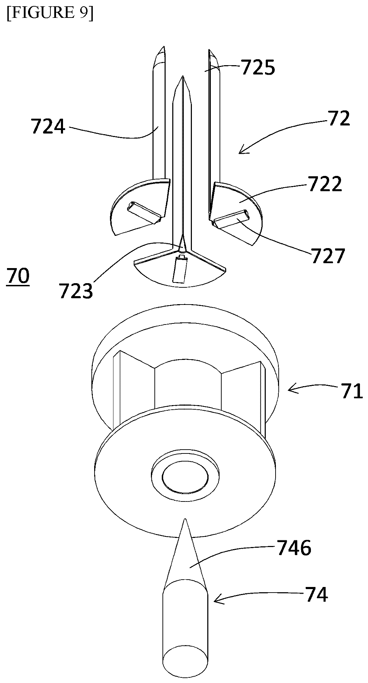

Referring to FIGS. 7 to 9, the separator reforming device 70 includes: a body portion 71 that supports a bottom surface of the electrode assembly, and a head portion 72 disposed above the body portion 71. The head portion 72 includes a plurality of split heads 722 installed above the body portion so as to be able to reciprocate in radial direction with respect to the center of the body portion 71. The split head 722 may have a sector shape and the plurality of split heads 722 may be divided in a circumferential direction with respect to the center. In one embodiment, three split heads 722 are provided to correspond to a 120-degree section. In order to enable radial movement of the plurality of split heads 722, the radius of the sector shape of the split head 722 is set to be smaller than that of the upper portion of the body portion 71. The upper surface of the split head 722 may also support the electrode assembly 20.

Each of the plurality of split heads 722 includes a reform pin 724 connected to each of the plurality of split heads 722 at the center of the sector shape and extending upward in the axial direction from each of the plurality of split heads 722 so as to be inserted into the core hollow portion of the electrode assembly. The outer circumferential surface of the reform pin 724 has a convex arc-shaped profile corresponding to the inner circumferential surface of the electrode assembly 20. On the reform pin 724, is provided an insertion guide surface 725 having a form of a slanted surface having an outer diameter gradually decreasing toward the upper end thereof.

The body portion 71 is provided with a plurality of first guides 711 extending in the radial direction to guide the radial movement of each of the plurality of split heads 722. In one embodiment, three first guides 711 are provided at 120-degree intervals in the circumferential direction. In one example, the first guide 711 may be a rail groove extending in the radial direction with a narrow upper portion and a wide lower portion.

Each of the plurality of split heads 722 may be provided with a second guide 727 sliding in the radial direction along the first guide 711 while being in contact with the first guide 711. In one example, the second guide 727 may be a rail protrusion extending in the radial direction with a narrow upper portion and a wide lower portion and. The rail protrusion is connected to the bottom surface of the split head 722.

Accordingly, The plurality of split heads 722 may move to default positions gathered at the center of the body portion 71 and also to an extended positions radially outward from the center.

The separator reforming device 70 further includes an actuator 74 moving the plurality of split heads 722 radially outward. The actuator 74 is installed at the body portion 71 so as to be movable upward and downward in the axial direction. The actuator 74 has a cylindrical shape extending in the axial direction, and a slanted outer circumferential surface 746 having an outer diameter gradually decreasing toward the upper end thereof is provided above the actuator 74.

A contacting portion 723 in contact with the actuator 74 is provided on a radially inner side of each of the plurality of split heads 722. The contacting portion 723 may be a slanted inner circumferential surface having an inner diameter gradually decreasing toward the upper end thereof. The slope of the slanted outer circumferential surface 746 of the actuator 74 and the slope of the slanted inner circumferential surface 723 may correspond to each other. Accordingly, when the actuator 74 moves upward from the body portion 71, the plurality of split heads 722 move radially outward.

The separator reforming device 70 includes a return member 76 returning the plurality of split heads 722 to a radially inner side. In one example, the return member 76 may include an elastic body that elastically supports the plurality of split heads 722 radially inward such as a coil spring embedded in the rail groove 711 and extending in the lengthwise direction of the rail groove, i.e., in the radial direction of the body portion 71.

The separator reforming device 70 further includes a heater 75 heating the reform pin 724. The heater 75 is embedded in the upper surface of the body portion 71 that is in contact the head portion 72. The heater 75 may heat the reform pin 724 by a resistance heating method. The reform pin 724 may be heated to 120 to 140 degrees Celsius by the heater 75. In one example, the reform pin 724 is heated to about 130 degrees Celsius.

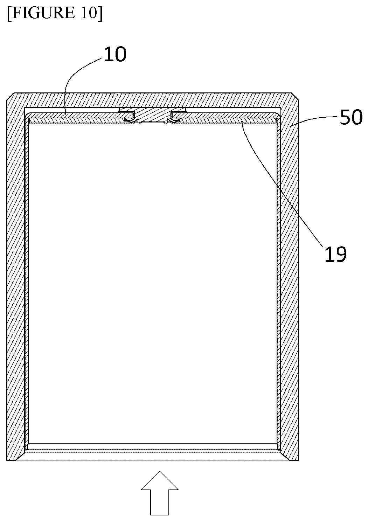

Hereinafter, referring to FIGS. 10 to 19, described is a method of reforming a separator portion, i.e., a separator core, provided in the core hollow portion 29 of the electrode assembly 20 while inserting the electrode assembly 20 into the can 10 using the electrode assembly insertion device 90 equipped with the separator reforming device 70.

Referring to FIG. 10, the can 10 is gripped by the can holder 50 in an orientation wherein the opening of the can 10 faces downward. With the can 10 gripped by the can holder 50, the opening of the can 10 facing downward exposes the internal space of the can 10. As shown, an insulator 19 is mounted on the inner surface of the end wall 12 of the can 10. While the insulator 19 exposes the first electrode terminal 17 downward, the insulator 19 does not substantially expose the end wall 12 downward.

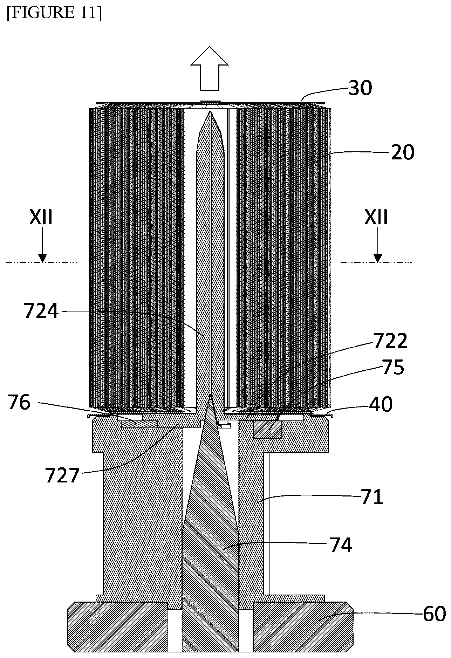

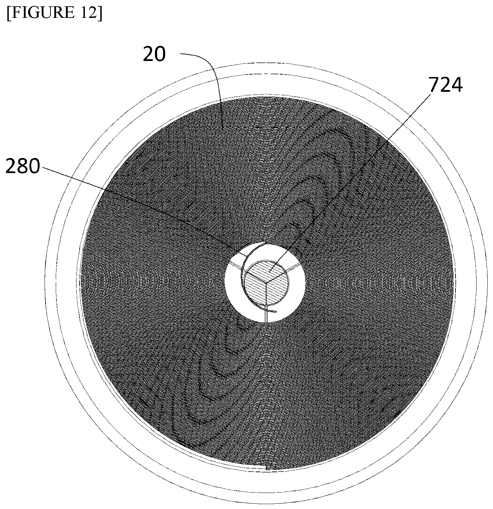

Referring to FIG. 11, the reform pin 724 of the split head 722 arranged at the default position is inserted into the core hollow portion 29 of the electrode assembly 20, and the electrode assembly 20 is placed on the separator reforming device 70. Referring to FIG. 12, the actual outer diameter of the entire reform pin 724 at the default position is smaller than the diameter of the core hollow portion 29 of the electrode assembly 20. The reform pin 724 is inserted into the core hollow portion 29 without deforming the core 280 of the separator 28 due to the insertion guide surface 725 at the upper portion of the reform pin 724. The separator reforming device 70 is installed in the lifter 60.

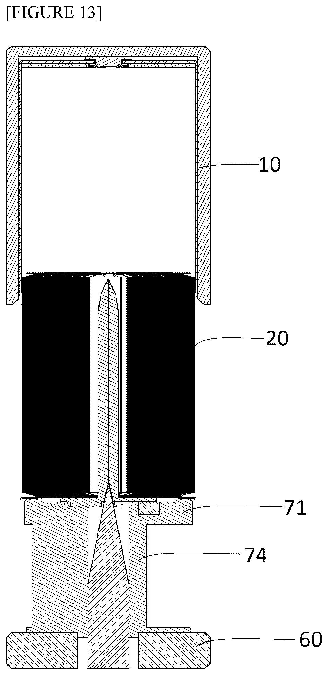

Referring to FIG. 13, the lifter 60 moves upward relative to the can 10 to insert the electrode assembly 20 through the opening of the can 10 to the first position of the internal space. The first position may be a position where a portion of the upper section of the electrode assembly 20 is inserted such that the electrode assembly 20 may stably pass through the opening of the can 10 and be aligned with the can 10 at the centers thereof.

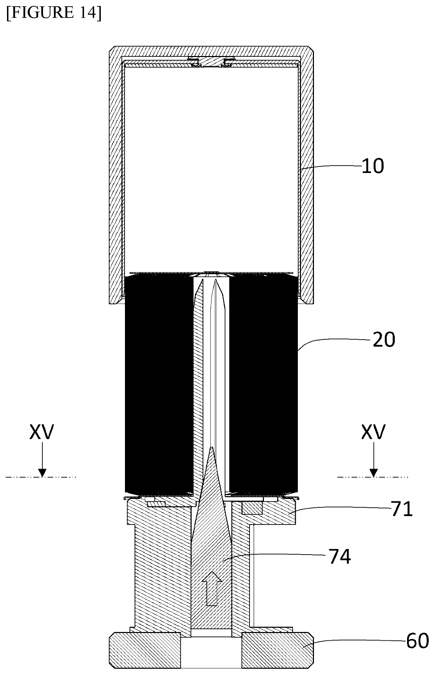

Referring to FIG. 14, the actuator 74 moves upward from the first position and comes into contact with the slanted inner circumferential surface 723 of the plurality of split heads 722. Accordingly, the plurality of split heads 722 moves radially outward. The length of the slanted outer circumferential surface 746 of the actuator 74 is longer than the length of the slanted inner circumferential surface 723. Accordingly, as the actuator 74 moves upward, the split head 722 moves radially outward.

The force exerted by the actuator 74 while moving upward is converted into a force that causes the outer circumferential surface of the reform pin 724 to bring the separator core 280 of the core hollow portion 29 into contact with the inner circumference of the electrode assembly 20 in radially outward direction. Therefore, by controlling the upward pressure of the actuator 74, the reform pin 724 may control the pressure at which the separator core 280 comes in contact with the inner circumference of the electrode assembly 20.

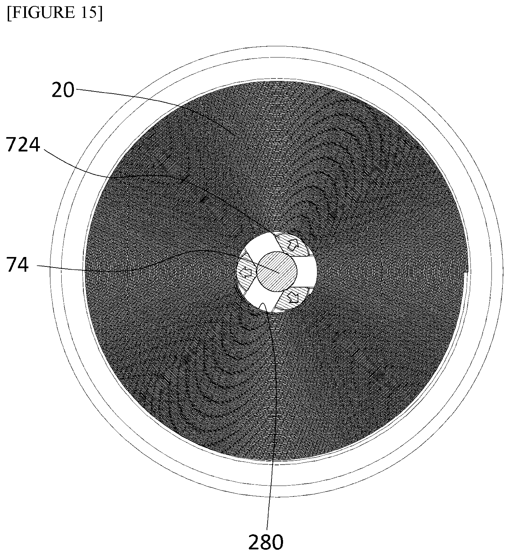

As shown in FIG. 15, the reform pin 724 may press the separator core 280 against the inner circumferential surface of the electrode assembly 20. Accordingly, the separator core 280 is reformed.

Preferably, the reform pin 724 may press the separator core 280 against the inner circumferential surface of the electrode assembly 20 while being heated by the heater 75. The heat generated from the heater 75 may be conducted to the reform pin 724 through the plurality of split heads 722. Accordingly, the separator core 280 is hot-reformed. The reform pin 724 may be continuously heated by the heater or may be heated while performing hot-reform.

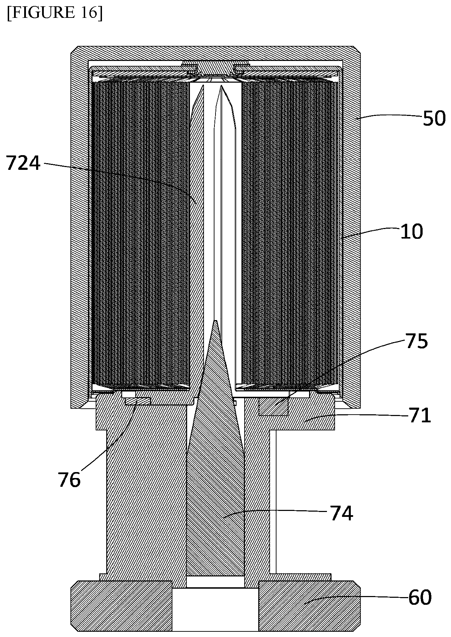

Referring to FIG. 16, the lifter 60 may be moved further upward to insert the electrode assembly 20 into the can 10 to the second position. The second position may be the final insertion position.

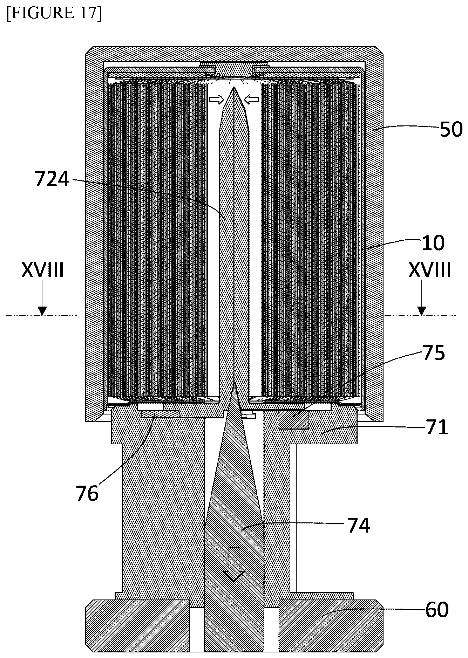

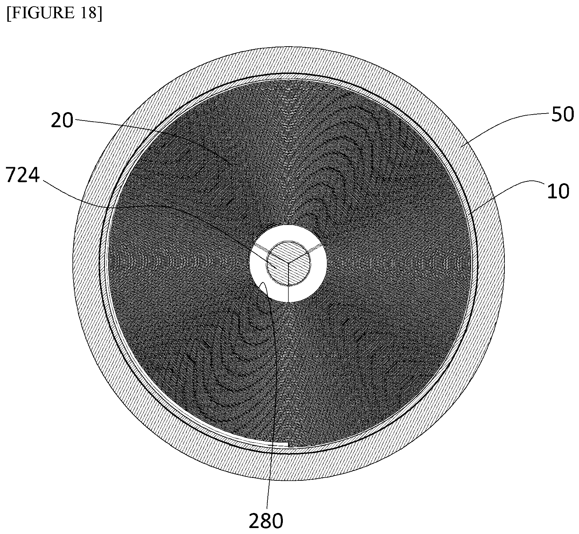

Referring to FIG. 17 and FIG. 18, when the electrode assembly 20 is inserted to the final position, the actuator 74 is lowered. Thereafter, the plurality of split heads 722 moves radially inward to the default position by the coil spring 76. Accordingly, the reform pin 724 is retracted from the inner circumferential surface of the electrode assembly 20. The core 280 of the separator is reformed to be fixed to and in contact with the inner circumferential surface of the electrode assembly 20 by the reform pin 724.

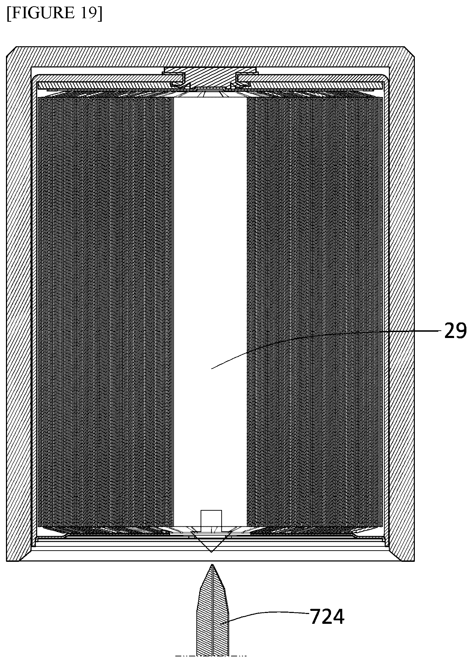

Referring to FIG. 19, when the reform pin 724 is retracted radially inward to be at the default position, the lifter 60 moves away from the can holder 50 to remove the reform pin 724 from the core hollow portion 29 of the electrode assembly 20.

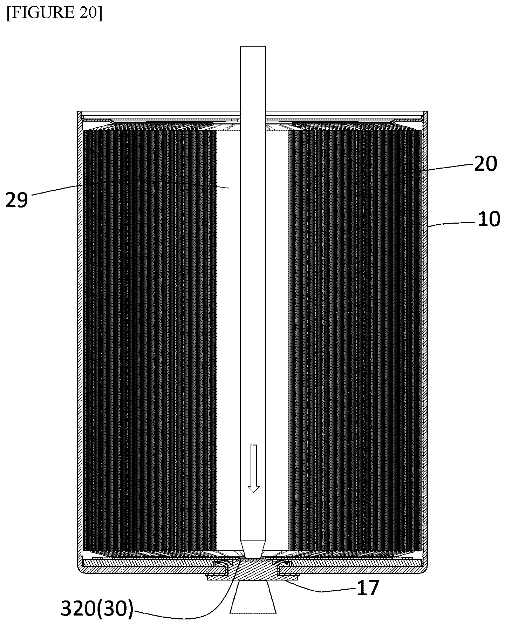

Referring to FIG. 20, when the electrode assembly 20 is accommodated in the internal space of the can 10, the first current collector plate 30 installed at the first axial end of the electrode assembly 20 faces the end wall 12 and the first electrode terminal 17, and the second current collector plate 40 installed at the second axial end of the electrode assembly 20 faces the opening. The insulator 19 interposed between the first current collector plate 30 and the end wall 12 in the axial direction electrically insulates the first current collector plate 30 from the end wall 12.

After the insertion of the electrode assembly 20 is completed, the terminal joint 320 of the first current collector plate 30 is bonded to the bottom surface of the first electrode terminal 17 by welding or the like. In one example, the welding may be performed by inserting a welding rod through the core hollow portion 29 of the electrode assembly 20. Accordingly, the first electrode terminal 17 and the first electrode 21 of the electrode assembly 20 are electrically connected to each other through the first current collector plate 30.

The edge portion 42 of the second current collector plate 40 may be electrically connected to the side wall 11 by being in contact with or being bonded to the side wall 11. Since the end wall 12 is electrically connected to the side wall 11, the end wall 12 forms a second electrode terminal having a different polarity from the first electrode terminal 17.

According to the embodiment, the process of inserting the electrode assembly 20 into the can 10 is performed with the core 280 of the separator 28 in contact with the inner circumferential surface of the electrode assembly 20 by the reform pin 724 such that the gas in the internal space of the can that escapes through the core hollow portion 29 may be prevented from loosening or deforming the core 280 of the separator 28. In addition, since the insertion process of the electrode assembly 20 and the separator reform process are performed simultaneously, the process time may be shortened.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A separator reforming device comprising:
a body portion supporting a bottom surface of an electrode assembly;
a head portion provided with a plurality of split heads installed above the body portion so as to be reciprocally movable in radial direction relative to a center thereof; and
a reform pin connected to each of the plurality of split heads at the center of the head portion and extending upward in axial direction from each of the plurality of split heads so as to be inserted into a core hollow portion of the electrode assembly.

2. The separator reforming device of claim 1, further comprising an actuator moving the plurality of split heads radially outward.

3. The separator reforming device of claim 1, further comprising a return member returning the plurality of split heads to a radially inner side.

4. The separator reforming device of claim 1, further comprising a heater heating the reform pin.

5. The separator reforming device of claim 1, wherein the body portion is provided with a first guide extending in the radial direction to guide radial movement of each of the plurality of split heads, and
each of the plurality of split heads is provided with a second guide sliding in the radial direction while being in contact with the first guide.

6. The separator reforming device of claim 1, wherein an actuator is installed at the body portion so as to be movable upward and downward in the axial direction, and
a contacting portion in contact with the actuator is provided on a radially inner side of each of the plurality of split heads.

7. The separator reforming device of claim 6, wherein a slanted outer circumferential surface having an outer diameter gradually decreasing toward upper end thereof is provided above the actuator, and
a slanted inner circumferential surface having an inner diameter gradually decreasing toward an upper end thereof is provided at the contacting portion.

8. The separator reforming device of claim 3, wherein the return member comprises an elastic body elastically supporting the plurality of split heads radially inward.

9. The separator reforming device of claim 4, wherein the heater heats the reform pin by a resistance heating method.

10. The separator reforming device of claim 4, wherein the reform pin is heated to 120 to 140 degrees Celsius by the heater.

11. An electrode assembly insertion device comprising:
a can holder supporting a can with an opening of an internal space thereof facing downward;
a lifter inserting an electrode assembly axially upward direction through the opening from a lower portion of the can holder; and
a separator reforming device according to any one of claims 1 to 10 installed at the lifter.

12. A method of reforming a separator portion provided at a core hollow portion of an electrode assembly using an electrode assembly insertion device of claim 11, the method comprising:
inserting the electrode assembly using a lifter into a first position of an internal space of a can through an opening of the can with a reform pin of a separator reforming device inserted into a core hollow portion of the electrode assembly, the separator reforming device having a split head arranged radially inner side thereof; and
operating an actuator to move the split head radially outward from the first position to bring the separator portion into contact with an inner circumference of the core hollow portion using the reform pin.

13. The separator reforming method of claim 12, further comprising: heating the reform pin to hot-reform the separator portion in contact with the inner circumference of the core hollow portion.

14. The separator reforming method of claim 12, further comprising: inserting the electrode assembly using the lifter to a second position deeper than the first position.
